# EUROPÄISCHE PATENTSCHRIFT

(11) **EP 2 868 790 B1**
(45) Veröffentlichungstag und Bekanntmachung des Hinweises auf die Patenterteilung: **02.03.2016**
(21) Anmeldenummer: 14175144.6
(22) Anmeldetag: 01.07.2014
(51) Int. Cl.: D04H 3/16, D01D 5/098, D01D 7/00, F16L 17/10, F16L 27/053, D04H 1/732, D04H 1/736

(54) **Ablagevorrichtung, insbesondere zur Ablage von Fasern**
Device for depositing fibres
Dispositif destiné à déposer des fibres

(30) Priorität: 15.10.2013 DE 102013111364
(43) Veröffentlichungstag der Anmeldung: 06.05.2015
(73) Patentinhaber: Reifenhäuser GmbH & Co. KG Maschinenfabrik, 53844 Troisdorf (DE)
(72) Erfinder: Eilers, Peter, 53840 Troisdorf (DE); Sanden, Sven, 51379 Leverkussen (DE); Liebetrau, Christian, 53844 Troisdorf (DE)
(74) Vertreter: Rohmann, Michael

(56) Entgegenhaltungen:
- EP-A1- 0 040 693
- WO-A1-2012/168143
- CH-A- 4 772
- DE-A1- 1 475 890
- DE-C1- 4 440 895
- DE-U- 6 804 235
- DE-U1- 9 417 188
- DE-U1-202005 000 624
- FR-A1- 2 214 854
- JP-A- 2003 240 174
- US-A- 1 218 997
- US-A- 5 503 265
- US-A1- 2012 242 081

## Beschreibung

Die Erfindung betrifft eine Ablagevorrichtung nach dem Oberbegriff von Anspruch 1. - Fasern meint im Rahmen der Erfindung insbesondere ersponnene Fasern bzw. ersponnene Filamente/Endlosfilamente. Die Fasern bzw. Filamente werden vorzugsweise mit einer Meltblown-Vorrichtung bzw. mit Hilfe eines Meltblown-Blaskopfes ersponnen. Sie können aber grundsätzlich auch mittels einer Spinnerette im Rahmen eines Spun-Bond-Verfahrens ersponnen werden. Die gasdurchlässige bzw. luftdurchlässige Ablagefläche befindet sich dann in der Regel unterhalb des Melt-blown-Blaskopfes bzw. unterhalb der Spinnerette und die ersponnenen Fasern werden auf der Oberfläche der Ablagefläche abgelegt bzw. zur Vliesbahn abgelegt. Mit Hilfe der unterhalb der Ablagefläche angeordneten Unterdruckkammer wird Luft durch die Ablagefläche nach unten gesaugt und dadurch wird dieFaserablage bzw. die gebildete Vliesbahn auf der Ablagefläche stabilisiert. Die Ablagefläche ist insbesondere in Form eines endlos umlaufenden Ablagebandes bzw. Ablagesiebbandes ausgebildet.

US 55 0302 65 A offenbart eine Ablagevorrichtung zur Ablage von Fasern, die horizontal und vertikal in position verstallbar ist.

Ablagevorrichtungen der vorstehend beschriebenen Art sind aus der Praxis in unterschiedlichen Ausführungsformen bekannt. Bei diesen bekannten Ablagevorrichtungen wird zum Absaugen von Prozessluft und Umgebungsluft durch die Ablagefläche ein relativ hoher Unterdruck benötigt. Gleichzeitig muss die Möglichkeit gegeben sein, dass die Ablagefläche bzw. das Ablageaggregat horizontal und vertikal in die erforderliche Betriebsposition verfahrbar ist und die Ablagefläche sollte fernerhin zur Erzielung einer optimalen Betriebsposition aus einer horizontalen Ebene in eine schiefe Ebene verschwenkbar sein. Bei bekannten Ablagevorrichtungen sind diese Bewegungsmöglichkeiten der Ablagefläche bzw. des Ablageaggregates ohne Umbauten bzw. ohne Umbauaufwand im Hinblick auf die Unterdruckerzeugung nur bei hoher Verlustleistung und mit relativ geringem Unterdruck realisierbar. Höhere Unterdrücke und die Absaugung größerer Luftmengen sind nur im Rahmen aufwendiger Umbauten zu erzielen. Es ist auch bekannt, die Absaugleitungen für die Unterdruckerzeugung als Wellrohre bzw. Wellschläuche oder als spiralunterstützte Kunststoffschläuche zu verwirklichen. Diese Absaugleitungen sind bauartbedingt auf geringe Unterdrücke beschränkt.

Demgegenüber liegt der Erfindung das technische Problem zugrunde, eine Ablagevorrichtung der eingangs genannten Art anzugeben, bei dem die vorstehend beschriebenen Nachteile/Probleme vermieden werden können bzw. effektiv reduziert werden können und bei der insbesondere hohe Unterdrücke erzeugt werden können und hohe Luftmengen abgesaugt werden können ohne dass hierzu aufwendige Umbaumaßnahmen erforderlich sind.

Zur Lösung dieses technischen Problems lehrt die Erfindung eine Ablagevorrichtung, insbesondere zur Ablage von Fasern/Filamenten bzw. zur Ablage von Vliesbahnen aus Fasern/Filamenten, - wobei ein Ablageaggregat mit zumindest einer gasdurchlässigen bzw. luftdurchlässigen Ablagefläche und zumindest einer unterhalb der Ablagefläche angeordneten Unterdruckkammer zur Erzeugung eines Unterdruckes unter der Ablagefläche vorgesehen ist, wobei an die Unterdruckkammer zumindest eine Absaugleitung angeschlossen ist, die mit zumindest einer Unterdruckerzeugungseinrichtung bzw. mit zumindest einer Vakuumeinrichtung/Vakuumpumpe verbunden ist,
wobei zumindest ein Leitungsabschnitt der Absaugleitung mit zumindest einem Ende an eine Anschlussmuffe der Absaugleitung angeschlossen ist, wobei der Leitungsabschnitt und die Anschlussmuffe relativ zueinander verschwenkbar sind und wobei zwischen Leitungsabschnitt und Anschlussmuffe zumindest eine über den Umfang des Leitungsabschnittes umlaufende Dichtung vorhanden ist und wobei zwischen Anschlussmuffe und Leitungs abschnitt eine aktivierbare bzw. deaktivierbare Hauptdichtung zwichenges haltet ist.

Bei den auf der Ablagevorrichtung bzw. Ablagefläche abgelegte Fasern handelt es sich insbesondere um Fasern/Filamente aus thermoplastischem Kunststoff. Zweckmäßigerweise werden Endlosfilamente aus thermoplastischem Kunststoff auf der Ablagefläche zu einer Vliesbahn abgelegt.

Es liegt im Rahmen der Erfindung, dass die Anschlussmuffe und/oder der Leitungsabschnitt zylinderförmig bzw. im Wesentlichen zylinderförmig und im Querschnitt kreisförmig bzw. im Wesentlichen kreisförmig ausgebildet ist/sind. Der Leitungsabschnitt ist vorzugsweise als starres und empfohlenermaßen als lineares bzw. im Wesentlichen lineares Rohrleitungsteil ausgebildet. Zweckmäßigerweise ist der Leitungsabschnitt wellrohrabschnittsfrei bzw. im Wesentlichen wellrohrabschnittsfrei ausgeführt.

Nach besonders bevorzugter Ausführungsform der Erfindung ist die erfindungsgemäße Ablagevorrichtung Bestandteil einer Meltblown-Vorrichtung und somit werden Meltblown-Fasern bzw. eine Vliesbahn aus Meltblown-Fasern auf dem Ablageaggregat / auf der Ablagefläche abgelegt. Meltblown-Fasern werden als Endlosfilamente erzeugt. Es liegt im Rahmen der Erfindung, dass das Ablageaggregat bzw. die Ablagefläche unterhalb eines Meltblown-Blaskopfes einer Meltblown-Vorrichtung angeordnet ist. Die erfindungsgemäße Ablagevorrichtung hat sich bei der Erzeugung von Meltblown-Fasern besonders bewährt. - Grundsätzlich könnte die Ablagevorrichtung jedoch auch Bestandteil einer Spun-Bond-Vorrichtung zur Erzeugung von Endlosfilamenten im Rahmen eines Spun-Bond-Verfahrens sein. Die Filamente werden dann mit Hilfe einer Spinnerette erzeugt und zweckmäßigerweise ist das Ablageaggregat bzw. ist die Ablagefläche unterhalb dieser Spinnerette angeordnet. Die Endlosfilamente bzw. die Vliesbahn aus den Endlosfilamenten wird auf der Ablagefläche abgelegt und auf diese Weise wird ein Spun-Bond-Vlies erzeugt.

Es liegt im Rahmen der Erfindung, dass die Ablagefläche des Ablageaggregates bewegbar ist bzw. in Förderrichtung der Vliesbahn bewegbar ist. Gemäß besonders bevorzugter Ausführungsform der Erfindung ist die Ablagefläche ein Ablagesiebband bzw. Bestandteil eines Ablagesiebbandes und das Ablagesiebband ist bevorzugt ein endlos umlaufendes Ablagesiebband. Somit ist die Ablagefläche in Form eines Endlosbandes realisiert.

Es liegt im Rahmen der Erfindung, dass das Ablageaggregat aus Ablagefläche und Unterdruckkammer bewegbar bzw. verschiebbar ist, insbesondere vertikal und/oder horizontal bewegbar verschiebbar ist. Zweckmäßigerweise ist das Ablageaggregat insbesondere relativ bezüglich des Großteils der Absaugleitung bzw. relativ bezüglich eines Basisteils der Absaugleitung vertikal und/oder horizontal bewegbar bzw. verschiebbar. Empfohlenermaßen ist die Ablagefläche bzw. ist das Ablageaggregat verkippbar bzw. verdrehbar. Dabei wird die Ablagefläche zweckmäßigerweise aus einer horizontalen Ebene in eine schiefe Ebene verkippt bzw. verdreht. Es liegt im Rahmen der Erfindung, dass bei diesen Bewegungsmöglichkeiten des Ablageaggregates die Absaugleitung nicht getrennt bzw. auseinandermontiert werden muss. Vielmehr gewährleistet die erfindungsgemäße relative Verschwenkbarkeit von Leitungsabschnitt und Anschlussmuffe, dass der Saugbetrieb der Absaugleitung bei den Bewegungen/Verschiebungen/Verkippungen des Ablageaggregates aufrechterhalten werden kann.

Nach ganz besonders bevorzugter Ausführungsform der Erfindung ist der Leitungsabschnitt mit beiden Enden jeweils an eine Anschlussmuffe der Absaugleitung angeschlossen. Empfohlenermaßen ist der Leitungsabschnitt relativ zu den Anschlussmuffen verschwenkbar, besonders bevorzugt kugelgelenkartig verschwenkbar. Der Leitungsabschnitt übernimmt somit gleichsam die Funktion eines Kupplungsgelenkteils zwischen den beiden Anschlussmuffen. Dadurch wird auf besonders effektive Weise gewährleistet, dass das Ablageaggregat in der oben beschriebenen Weise bewegbar ist, insbesondere vertikal und/oder horizontal verschiebbar/verfahrbar ist und/oder verkippbar bzw. verdrehbar ist. Unerwünschte Unterbrechungen der Absaugleitung bzw. aufwendige Umbauarbeiten sind bei diesen Bewegungen des Ablageaggregates erfindungsgemäß nicht erforderlich. - Es liegt im Übrigen im Rahmen der Erfindung, dass die beiden Anschlussmuffen und der Leitungsabschnitt zylinderförmig bzw. im Wesentlichen zylinderförmig ausgebildet sind.

Es liegt weiterhin im Rahmen der Erfindung, dass der Leitungsabschnitt mit einem Leitungsabschnittsende in eine Anschlussmuffe eingreift und besonders bevorzugt, dass der Leitungsabschnitt mit beiden Leitungsabschnittsenden jeweils in eine Anschlussmuffe eingreift. Es empfiehlt sich, dass ein Leitungsabschnittsende des Leitungsabschnittes in der zugeordneten Anschlussmuffe - bevorzugt kugelgelenkartig - bewegbar bzw. verschwenkbar ist. - Grundsätzlich ist es auch denkbar, dass die Absaugleitung der erfindungsgemäßen Ablagevorrichtung mehrere Aggregate aus jeweils zwei Anschlussmuffen und einem Leitungsabschnitt aufweist.

Gemäß besonders empfohlener Ausführungsform der Erfindung ist eine erste Anschlussmuffe fest mit dem Ablageaggregat aus der Ablagefläche und der Unterdruckkammer verbunden und bewährtermaßen ist eine zweite Anschlussmuffe fest mit dem Basisteil der Absaugleitung verbunden. Fest verbunden meint hier insbesondere, dass keine Relativbewegung der jeweils genannten Komponenten zueinander möglich ist bzw. im Wesentlichen keine Relativbewegung möglich ist.

Nach besonders bevorzugter Ausführungsform der Erfindung ist zwischen einer Anschlussmuffe und dem Leitungsabschnitt eine Manschettendichtung vorgesehen. Gemäß einer empfohlenen Ausführungsvariante ist die Manschettendichtung an der Anschlussmuffe fest angeschlossen und liegt an dem Leitungsabschnitt unter Vorspannung an. Dabei ist der Leitungsabschnitt relativ zur Anschlussmuffe und somit relativ zur Manschettendichtung bewegbar bzw. verschwenkbar und die unter Vorspannung an dem Leitungsabschnitt anliegende Manschettendichtung gleitet bei einer solchen Bewegung bzw. Verschwenkung an der Oberfläche des Leitungsabschnittes entlang. Prinzipiell kann die Manschettendichtung auch an dem Leitungsabschnitt fest angeschlossen sein und an der Anschlussmuffe unter Vorspannung anliegen. Dann vollzieht die Manschettendichtung die Bewegungen des Leitungsabschnittes zusammen mit dem Leitungsabschnitt. Es liegt im Rahmen der Erfindung, dass die zumindest eine Manschettendichtung über den Umfang des Leitungsabschnittes bzw. über den Umfang der Anschlussmuffe umläuft.

Nach besonders bewährter Ausführungsform der Erfindung ist die Manschettendichtung an der bzw. einer Anschlussmuffe fest angeschlossen und die Manschettendichtung bzw. ein Dichtungsfortsatz der Manschettendichtung liegt an der Außenseite des Leitungsabschnittes unter Vorspannung - und bevorzugt ohne weitere Fixierung - an. Zweckmäßigerweise ragt dabei die Manschettendichtung bzw. der Dichtungsfortsatz der Manschettendichtung über das leitungsabschnittseitige Stirnende der Anschlussmuffe hinaus. Bei dieser bevorzugten Ausführungsform ist eine Relativbewegung des Leitungsabschnittes in Bezug auf das Aggregat aus Anschlussmuffe und daran fest angeschlossener Manschettendichtung möglich. Das Anliegen der Manschettendichtung bzw. des Dichtungsfortsatzes der Manschettendichtung an der Außenseite des Leitungsabschnittes unter Vorspannung wird vorzugsweise mit Hilfe eines über den Außenumfang des Leitungsabschnittes umlaufenden Fixierungsringes realisiert. Der Fixierungsring liegt dabei zweckmäßigerweise in einer Aufnahmeausnehmung der Manschettendichtung bzw. des Dichtungsfortsatzes.

Die Enfindung ist dadurch auch gekennzeichnet, dass zwischen einer Anschlussmuffe und dem Leitungsabschnitt eine aktivierbare bzw. deaktivierbare Hauptdichtung zwischengeschaltet ist. Vorzugsweise ist diese Hauptdichtung an beiden Anschlussmuffen bzw. im Übergangsbereich zwischen beiden Anschlussmuffen und dem jeweiligen Leitungsabschnittsende realisiert. Empfohlenermaßen ist die Hauptdichtung am leitungsabschnittseitigen Stirnende der Anschlussmuffe vorgesehen und zweckmäßigerweise läuft die Hauptdichtung bzw. läuft eine einzige Hauptdichtung über den Umfang des Leitungsabschnittes um. - Eine sehr empfohlene Ausführungsform der Erfindung zeichnet sich dadurch aus, dass im deaktivierten Zustand der Hauptdichtung die Bewegung bzw. Verschiebung des Ablageaggregates aus Ablagefläche und Unterdruckkammer erfolgt und dass im aktivierten Zustand der Hauptdichtung der Produktionsbetrieb der Ablagevorrichtung stattfindet. Produktionsbetrieb meint dabei den normalen Betrieb der Ablagevorrichtung bei der Ablage der Fasern bzw. bei der Bildung der zu erzeugenden Vliesbahn.

Es empfiehlt sich, dass die Hauptdichtung eine über den Umfang der Anschlussmuffe bzw. über den Umfang des Leitungsabschnittes umlaufende aufblasbare Ringdichtung ist, wobei die Ringdichtung in dem aktivierten Zustand aufgeblasen ist. Dementsprechend ist die Ringrichtung im deaktivierten Zustand der Hauptdichtung entlüftet. Vorzugsweise ist die Ringdichtung als aufblasbare dichtende Schlauchleitung ausgebildet, wobei die Wandung der Schlauchleitung bzw. der Ringdichtung empfohlenermaßen aus einem Elastomer besteht. Grundsätzlich kann die umlaufende Ringdichtung auch aus einer Mehrzahl aus aneinander angrenzenden und über den Umfang des Leitungsabschnittes bzw. der Anschlussmuffe umlaufenden Ringsegmenten bzw. Dichtungssegmenten bestehen. - Zweckmäßigerweise läuft die Hauptdichtung bzw. die aufblasbare Ringdichtung über den Innenumfang einer Anschlussmuffe und über den Außenumfang des Leitungsabschnittes um.

Es liegt im Rahmen der Erfindung, dass die aktivierbare bzw. deaktivierbare Hauptdichtung und die Manschettendichtung am leitungsabschnittseitigen Stirnende einer Anschlussmuffe angeordnet sind. Bevorzugt sind dabei Hauptdichtung und Manschettendichtung benachbart bzw. unmittelbar benachbart zueinander angeordnet. Es liegt weiterhin im Rahmen der Erfindung, dass sowohl die Hauptdichtung als auch die Manschettendichtung über den Umfang des Leitungsabschnittes bzw. über den Umfang der zugeordneten Anschlussmuffe umläuft. Fernerhin liegt es im Rahmen der Erfindung, dass sowohl die Hauptdichtung im aktivierten Zustand als auch die Manschettendichtung dichtend bzw. abdichtend an der Außenseite des Leitungsabschnittes anliegen.

Vorzugsweise positioniert die Hauptdichtung im aktivierten Zustand den Leitungsabschnitt konzentrisch in der Anschlussmuffe. Besonders vorzugsweise wird der Leitungsabschnitt durch Aufblasen der Hauptdichtung konzentrisch in der Anschlussmuffe positioniert. Es empfiehlt sich, dass die Hauptdichtung innerhalb von 0,5 min bis 5 min und vorzugsweise innerhalb von 1 min bis 2 min aufgeblasen wird. Die kontrollierte Aufblasgeschwindigkeit ermöglicht es, dass sich die einzelnen Komponenten, also Anschlussmuffe, Hauptdichtung und Leitungsabschnitt, gleichmäßig konzentrisch zueinander setzen können. Insbesondere weist die Hauptdichtung im aktivierten Zustand einen konstanten Querschnitt auf.

Gemäß einer bevorzugten Ausführungsform dichtet die Manschettendichtung bei auftretendem Unterdruck ab. Vorzugsweise dichtet die Manschettendichtung bis zu einem Saugunterdruck von wenigstens 1.000 Pa und besonders vorzugsweise von wenigstens 2.000 Pa. Insbesondere dichtet die Manschettendichtung bei auftretendem Unterdruck ab, auch wenn die Hauptdichtung ausfällt.

Zur Lösung des technischen Problems lehrt die Erfindung ein Ablageverfahren nach dem Oberbegriff von Anspruch 17.

Es empfiehlt sich, dass zunächst ein Saugunterdruck in dem Leitungsabschnitt erzeugt wird. Vorzugsweise wird dann die Ablagevorrichtung relativ zur Unterdruckerzeugungseinrichtung verfahren. Bevorzugt wird die Ablagevorrichtung in eine Produktionsposition verfahren. Vorteilhafterweise wird danach die Hauptdichtung aufgeblasen, welche den Leitungsabschnitt konzentrisch in der Anschlussmuffe positioniert. Bevorzugt wird dann die Unterdruckerzeugungseinrichtung mit maximaler Nennleistung betrieben. Vorteilhafterweise wird dann die Produktion der Vliesbahn begonnen. Das Herunterfahren der Vorrichtung wird bevorzugt in entsprechend umgekehrter Reihenfolge vorgenommen.

Der Erfindung liegt die Erkenntnis zugrunde, dass bei der erfindungsgemäßen Ablagevorrichtung auf einfache und problemlose Weise Bewegungen des Ablageaggregates aus Ablagefläche und Unterdruckkammer möglich sind, ohne dass aufwendige und kostspielige Umbauarbeiten erforderlich sind und ohne dass die Unterdruckerzeugung eingeschränkt wird bzw. wesentlich eingeschränkt wird. Das Ablageaggregat kann vertikal und/oder horizontal verschoben werden sowie verkippt bzw. verdreht werden und nichtsdestoweniger sind aufwendige Maßnahmen an der angeschlossenen Absaugleitung nicht notwendig. Mit der erfindungsgemäßen Ablagevorrichtung ist die Erzeugung verhältnismäßig hoher Unterdrücke möglich und durch die Ablagefläche können mittels der Unterdruckkammer verhältnismäßig hohe Luftmengen abgesaugt werden. Dabei ist eine flexible Einstellung der Produktionsparameter im angeschlossenen Zustand und im Betrieb der Absaugleitung möglich. Im Ergebnis werden höhere Durchsatzleistungen bei großer Flexibilität gewährleistet. Die erfindungsgemäß ausgestaltete Absaugleitung zeichnet sich auch durch einen relativ geringen Strömungswiderstand aus. Im Ergebnis kann die erfindungsgemäße Ablagevorrichtung mit Hilfe von einfachen und kostengünstigen Komponenten realisiert werden und nichtsdestoweniger ist eine präzise und funktionssichere Funktionsweise gewährleistet.

Nachfolgend wird die Erfindung anhand einer lediglich ein Ausführungsbeispiel darstellenden Zeichnung näher erläutert. Es zeigen in schematischer Darstellung:
- Fig. 1: eine Frontansicht einer erfindungsgemäßen Ablagevorrichtung,
- Fig. 2: eine Draufsicht auf den Gegenstand gemäß Fig. 1,
- Fig. 3: einen Teil der Vorrichtung nach Fig. 2 (Absaugleitung) in einer anderen Funktionsstellung,
- Fig. 4: einen Schnitt A-A durch den Gegenstand gemäß Fig. 3,
- Fig. 5: eine Seitenansicht eines Längsschnittes durch einen Teil der erfindungsgemäßen Absaugleitung und
- Fig. 6: den Gegenstand nach Fig. 5 in einer anderen Funktionsstellung.

Die Figuren zeigen eine erfindungsgemäße Ablagevorrichtung zur Ablage von Fasern und zwar bevorzugt und im Ausführungsbeispiel zur Ablage von Meltblown-Filamenten. Diese Meltblown-Filamente werden mit Hilfe eines nicht dargestellten Meltblown-Blaskopfes hergestellt und zur Vliesbahn aus Meltblown-Filamenten auf dem Ablageaggregat 1 bzw. auf der luftdurchlässigen Ablagefläche 2 des Ablageaggregates 1 abgelegt. Der Meltblown-Blaskopf ist in der Regel über dem Ablageaggregat 1 bzw. über der Ablagefläche 2 angeordnet. Die Ablagefläche 2 ist empfohlenermaßen und im Ausführungsbeispiel als endlos umlaufendes Ablagesiebband ausgebildet. Das Ablageaggregat 1 weist neben der luftdurchlässigen Ablagefläche 2 eine unterhalb der Ablagefläche 2 angeordnete Unterdruckkammer 3 zur Erzeugung eines Unterdruckes unter dieser Ablagefläche 2 auf. An die Unterdruckkammer 3 ist im Ausführungsbeispiel eine Absaugleitung 4 angeschlossen, die mit einer nicht dargestellten Unterdruckerzeugungseinrichtung bzw. Vakuumpumpe verbunden ist. Mittels der Unterdruckerzeugungseinrichtung bzw. über die Absaugleitung 4 wird in der Unterdruckkammer 3 unterhalb der Ablagefläche 2 ein Unterdruck bzw. Vakuum erzeugt und dadurch wird durch die luftdurchlässige Ablagefläche bzw. durch das endlos umlaufende Ablegesiebband Luft - bzw. Prozessluft und Umgebungsluft - gesaugt. Das hat zur Folge, dass die Filamentablage bzw. die Vliesbahn auf der Ablagefläche 2 stabilisiert wird. Es liegt im Rahmen der Erfindung, dass die erzeugten bzw. abgelegten Meltblown-Filamente aus thermoplastischem Kunststoff bestehen.

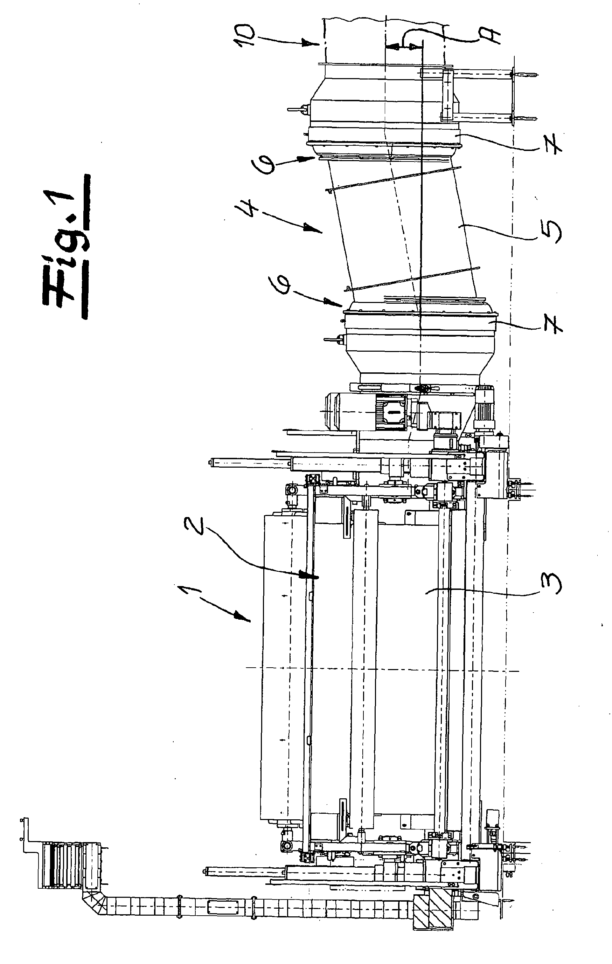

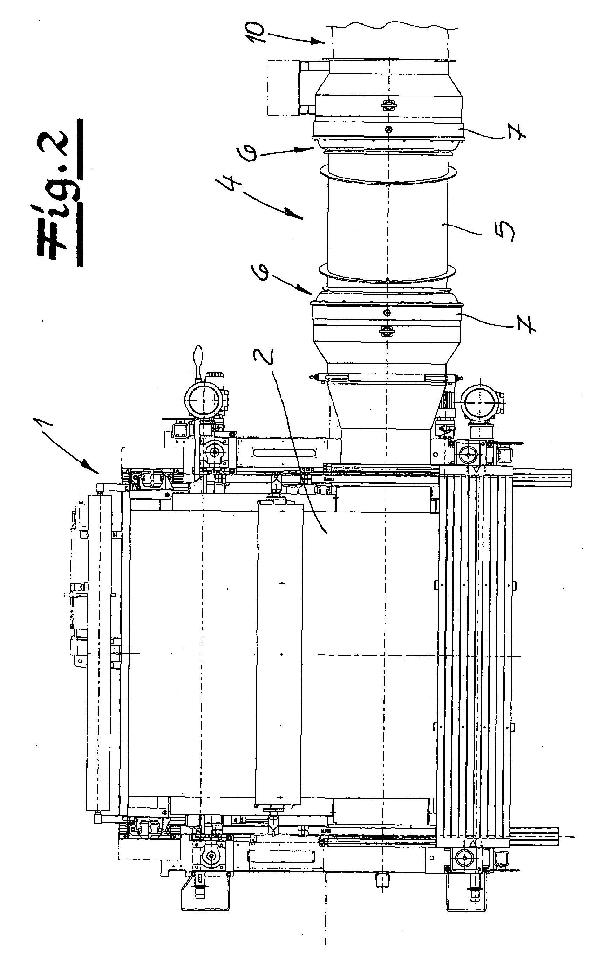

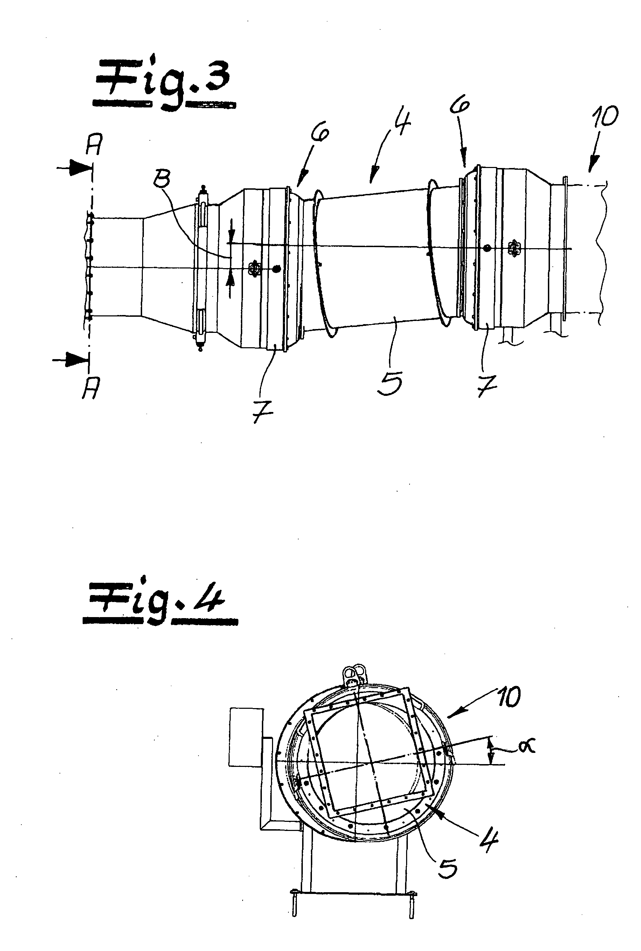

Bevorzugt und im Ausführungsbeispiel weist die Absaugleitung 4 vor dem Ablageaggregat 1 bzw. unmittelbar benachbart zum Ablageaggregat 1 ein Verschwenkaggregat aus zwei Anschlussmuffen 7 sowie einem zwischen den Anschlussmuffen 7 angeordnetem Leitungsabschnitt 5 auf. Der Leitungsabschnitt 5 greift mit seinen beiden Leitungsabschnittsenden 6 in die Anschlussmuffen 7 ein. Der Leitungsabschnitt 5 ist dabei empfohlenermaßen und im Ausführungsbeispiel kugelgelenkartig in den beiden Anschlussmuffen 7 verschwenkbar. Dies ergibt sich beispielsweise bei vergleichender Betrachtung der Fig. 2 und 3. Die erste (in Fig. 1 linke) Anschlussmuffe 7 ist vorzugsweise und im Ausführungsbeispiel fest mit dem Ablageaggregat 1 verbunden. Die zweite (in Fig. 1 rechte) Anschlussmuffe 7 ist mit dem Basisteil 10 der Absaugleitung 4 fest verbunden. Bei einem Verfahren/Verschieben des Ablageaggregates 1 folgt der Leitungsabschnitt 5 gleichsam dieser Bewegung des Ablageaggregates 1, indem der Leitungsabschnitt 5 in den Anschlussmuffen 7 kugelgelenkartig verschwenkt wird. Das kann bei einer vertikalen und/oder horizontalen Verschiebung des Ablageaggregates 1 oder bei einem Verkippen des Ablageaggregates 1 erfolgen, wenn insbesondere die horizontal angeordnete Ablagefläche 2 in eine schiefe Anordnung überführt wird. - Die Fig. 1 verdeutlicht im Übrigen ein vertikales Verschieben bzw. Verfahren des Ablageaggregates 1 um ein vertikales Verschiebungsmaß A gegenüber der Längsmittelachse des Basisteils 10 der Absaugleitung 4. In der Fig. 3 ist entsprechend ein horizontales Verschiebungsmaß B des Ablageaggregates 1 gegenüber der Längsmittelachse des Basisteils 10 dargestellt. Ein Verkippen bzw. Verdrehen des Ablageaggregates 1 um einen Verkippungs- bzw. Verdrehungswinkel α wird in der Fig. 4 verdeutlicht. Entsprechend dieser Verkippung bzw. Verdrehung des Ablageaggregates 1 wird auch die an das Ablageaggregat 1 angeschlossene Anschlussmuffe 7 (linke Anschlussmuffe 7 in der Fig. 1) gegenüber dem Basisteil 10 bzw. der daran fest angeschlossenen Anschlussmuffe 7 (rechte Anschlussmuffe 7 in Fig. 1) verdreht. Diese relative Verdrehung der Anschlussmuffen 7 zueinander wird durch den in die Anschlussmuffen 7 eingreifenden und in den Anschlussmuffen 7 kugelgelenkförmig verschwenkbaren Leitungsabschnitt 5 ermöglicht.

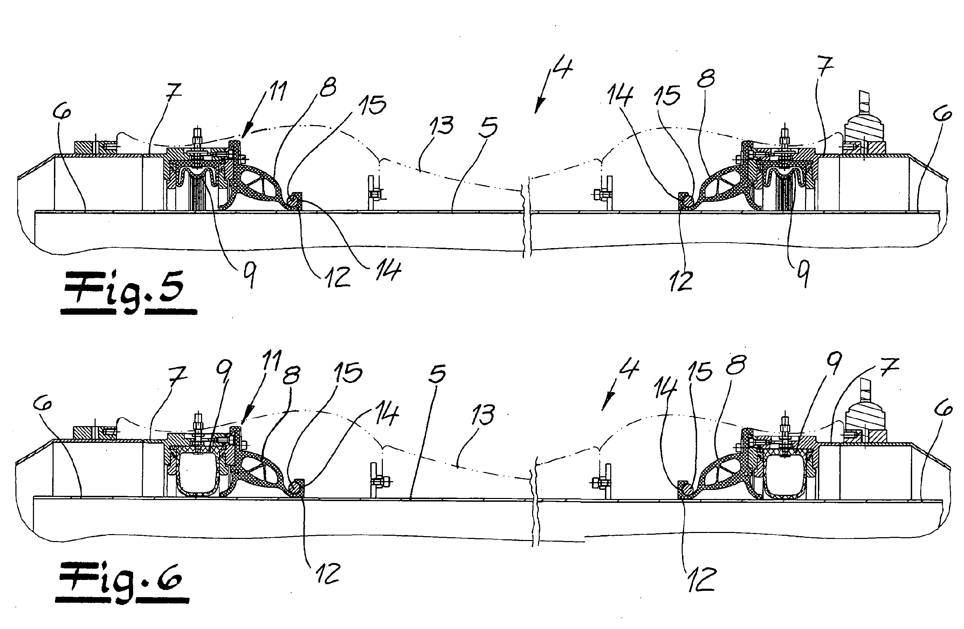

Empfohlenermaßen und im Ausführungsbeispiel ist zwischen den Anschlussmuffen 7 und dem Leitungsabschnitt 5 eine Manschettendichtung 8 vorgesehen (siehe insbesondere Fig. 5 und 6) und die Manschettendichtung 8 ist bevorzugt und im Ausführungsbeispiel an die zugeordnete Anschlussmuffe 7 fest angeschlossen und liegt an dem Leitungsabschnitt 5 unter Vorspannung an. Die Manschettendichtung 8 ragt dabei zweckmäßigerweise und im Ausführungsbeispiel über das leitungsabschnittsseitige Stirnende 11 der zugeordneten Anschlussmuffe 7 hinaus und ein Dichtungsfortsatz 12 der Manschettendichtung 8 liegt an der Außenseite des Leitungsabschnittes 5 unter Vorspannung an. Bevorzugt und im Ausführungsbeispiel weist der Dichtungsfortsatz eine Aufnahmeausnehmung 14 für einen Fixierungsring 15 auf. Die Manschettendichtungen 8 laufen über den Umfang der Absaugleitung 4 bzw. des Leitungsabschnittes 5 um. Das gilt auch für den Fixierungsring 15, der vorzugsweise die Vorspannung sicherstellt, unter der die Manschettendichtung 8 bzw. unter der der Dichtungsfortsatz 12 an dem Leitungsabschnitt 5 anliegt.

Im Rahmen der Erfindung, ist zwischen jeder Anschlussmuffe 7 und dem Leitungsabschnitt 5 eine aktivierbare bzw. deaktivierbare Hauptdichtung 9 zwischengeschaltet. Es empfiehlt sich, dass im deaktivierten Zustand der Hauptdichtung 9 eine Bewegung bzw. Verschiebung des Ablageaggregates 1 erfolgt und dass im aktivierten Zustand der Hauptdichtung 9 der Produktionsbetrieb der Ablagevorrichtung stattfindet. Wie oben bereits dargelegt, meint Produktionsbetrieb, dass eine Ablage der Meltblown-Filamente auf der Ablagefläche 2 erfolgt und insoweit eine Vliesbahn aus Meltblown-Filamenten erzeugt wird. Bevorzugt und im Ausführungsbeispiel ist die Hauptdichtung 9 fest an die zugeordnete Anschlussmuffe 7 angeschlossen und im aktivierten Zustand liegt die Hauptdichtung 9 dichtend an dem Leitungsabschnitt 5 bzw. an den in die jeweilige Anschlussmuffe 7 eingreifenden Leitungsabschnittsenden 6 an. - Nach besonders empfohlener Ausführungsform und im Ausführungsbeispiel ist die Hauptdichtung 9 eine über den Umfang der zugeordneten Anschlussmuffe 7 bzw. über den Umfang des Leitungsabschnittes 5 umlaufende aufblasbare Ringdichtung. Im aktivierten Zustand ist diese Ringdichtung (Hauptdichtung) aufgeblasen (Fig. 6) und im deaktivierten Zustand ist diese Ringdichtung entlüftet (Fig. 5). Die aufblasbare Ringdichtung ist bevorzugt und im Ausführungsbeispiel in Form eines aufblasbaren und über den Umfang des Leitungsabschnittes 5 umlaufenden Dichtungsschlauch realisiert.

Wenn das Ablageaggregat 1 verschoben bzw. verfahren werden soll, wird die Hauptdichtung 9 bzw. die Ringdichtung deaktiviert und somit entlüftet. Wenn sich dann das Ablageaggregat 1 in der gewünschten Betriebsposition befindet, kann die Hauptdichtung 9 bzw. die Ringdichtung belüftet bzw. aufgeblasen werden, so dass die Ringdichtung abdichtend an der Außenseite des Leitungsabschnittes 5 anliegt (Fig. 6). Dann kann der normale Produktionsbetrieb der Ablageeinrichtung stattfinden. Es liegt im Rahmen der Erfindung, dass durch die Absaugleitung 4 bzw. durch das Aggregat aus den beiden Anschlussmuffen 7 und dem Leitungsabschnitt 5 ständig - also auch bei dem Verschieben bzw. Verfahren des Ablageaggregates 1 Luft angesaugt wird bzw. Unterdruck gezogen wird. Somit sind aufwendige Umbauarbeiten beim Verfahren/Verschieben des Ablageaggregates 1 nicht erforderlich. Lediglich zur Vorbereitung des Produktionsbetriebes wird dann die Hauptdichtung 9 bzw. die Ringdichtung aktiviert/aufgeblasen und dann wird der für den Produktionsbetrieb erforderliche Unterdruck mit Hilfe der Absaugleitung 4 und der Unterdruckkammer 3 erzeugt.

Insbesondere in den Fig. 5 und 6 ist erkennbar, dass die aktivierbare bzw. deaktivierbare Hauptdichtung 9 und die Manschettendichtung 8 am leitungsabschnittseitigen Stirnende 11 jeder Anschlussmuffe 7 angeordnet ist und zwar sind die beiden Dichtungen 8, 9 benachbart bzw. unmittelbar zueinander benachbart an dem leitungsabschnittseitigen Stirnende 11 der entsprechenden Anschlussmuffe 7 angeordnet. Beide Dichtungen - das heißt die Hauptdichtung 9 bzw. Ringdichtung und die Manschettendichtung 8 liegen im Produktionsbetrieb bzw. Betriebszustand dichtend/abdichtend an der Außenseite des Leitungsabschnittes 5 an.

## Patentansprüche

1. Ablagevorrichtung, insbesondere zur Ablage von Fasern bzw. zur Ablage von Vliesbahnen aus Fasern, - wobei ein Ablageaggregat (1) mit zumindest einer gasdurchlässigen bzw. luftdurchlässigen Ablagefläche (2) und zumindest einer unterhalb der Ablagefläche (2) angeordneten Unterdruckkammer (3) zur Erzeugung eines Unterdruckes unter der Ablagefläche (2) vorgesehen ist, wobei an die Unterdruckkammer (3) zumindest eine Absaugleitung (4) angeschlossen ist, die mit zumindest einer Unterdruckerzeugungseinrichtung bzw. mit zumindest einer Vakuumeinrichtung verbunden ist, wobei zumindest ein Leitungsabschnitt (5) der Absaugleitung (4) mit zumindest einem Leitungsabschnittsende (6) an eine Anschlussmuffe (7) der Absaugleitung (4) angeschlossen ist, wobei der Leitungsabschnitt (5) und die Anschlussmuffe (7) relativ zueinander verschwenkbar sind und wobei zwischen Leitungsabschnitt (5) und Anschlussmuffe (7) zumindest eine umlaufende Dichtung (8, 9) vorhanden ist und wobei zwischen Anschlussmuffe (7) und Leitungsabschnitt (5) eine aktivierbare bzw. deaktivierbare Hauptdichtung (9) zwischengeschaltet ist.

2. Ablagevorrichtung nach Anspruch 1, wobei die Ablagevorrichtung Bestandteil einer Meltblown-Vorrichtung ist und wobei Meltblown-Fasern bzw. eine Vliesbahn aus Meltblown-Fasern auf dem Ablageaggregat (1) bzw. auf der Ablagefläche (2) ablegbar sind/ist.

3. Ablagevorrichtung nach einem der Ansprüche 1 oder 2, wobei die Ablagefläche (2) ein Ablagesiebband bzw. Bestandteil eines Ablagesiebbandes ist und wobei das Ablagesiebband bevorzugt ein endlos umlaufendes Ablagesiebband ist.

4. Ablagevorrichtung nach einem der Ansprüche 1 bis 3, wobei das Ablageaggregat (1) mit Ablagefläche (2) und Unterdruckkammer (3) bewegbar bzw. verschiebbar ist, insbesondere vertikal und/oder horizontal bewegbar bzw. verschiebbar ist und zwar insbesondere bezüglich eines Teils bzw. bezüglich eines Basisteils (10) der Absaugleitung (4) vertikal und/oder horizontal bewegbar bzw. verschiebbar ist.

5. Ablagevorrichtung nach einem der Ansprüche 1 bis 4, wobei der Leitungsabschnitt (5) mit beiden Leitungsabschnittsenden (6) jeweils an einer Anschlussmuffe (7) der Absaugleitung (4) angeschlossen ist und wobei bevorzugt der Leitungsabschnitt (5) relativ zu den Anschlussmuffen (7) verschwenkbar ist, besonders bevorzugt kugelgelenkartig verschwenkbar ist.

6. Ablagevorrichtung nach einem der Ansprüche 1 bis 5, wobei der Leitungsabschnitt (5) mit einem Leitungsabschnittsende (6) in eine Anschlussmuffe (7) eingreift - vorzugsweise der Leitungsabschnitt (5) mit beiden Leitungsabschnittsenden (6) jeweils in eine Anschlussmuffe (7) eingreift - und wobei ein Leitungsabschnittsende (6) in der zugeordneten Anschlussmuffe (7) - bevorzugt kugelgelenkartig - bewegbar bzw. verschwenkbar ist.

7. Ablagevorrichtung nach einem der Ansprüche 1 bis 6, wobei eine erste Anschlussmuffe (7) fest mit dem Ablageaggregat (1) verbunden ist und eine zweite Anschlussmuffe (7) fest mit dem Basisteil (10) der Absaugleitung (4) verbunden ist.

8. Ablagevorrichtung nach einem der Ansprüche 1 bis 7, wobei zwischen einer Anschlussmuffe (7) und dem Leitungsabschnitt (5) zumindest eine Manschettendichtung (8) vorgesehen ist, wobei die Manschettendichtung (8) entweder an der Anschlussmuffe (7) oder an dem Leitungsabschnitt (5) fest angeschlossen ist und an dem Leitungsabschnitt (5) oder an der Anschlussmuffe (7) unter Vorspannung anliegt.

9. Ablagevorrichtung nach Anspruch 8, wobei die Manschettendichtung (8) an der Anschlussmuffe (7) fest angeschlossen ist - wobei die Manschettendichtung (8) bevorzugt über das leitungsabschnittseitige Stirnende (11) der Anschlussmuffe (7) herausragt - und wobei die Manschettendichtung (8) bzw. ein Dichtungsfortsatz (12) der Manschettendichtung (8) an der Außenseite des Leitungsabschnittes (5) unter Vorspannung anliegt.

10. Ablagevorrichtung nach einem der Ansprüche 1 bis 9, wobei im deaktivierten Zustand der Hauptdichtung (9) eine Bewegung bzw. Verschiebung des Ablageaggregates (1) erfolgt und wobei im aktivierten Zustand der Hauptdichtung (9) der Produktionsbetrieb der Ablagevorrichtung stattfindet.

11. Ablagevorrichtung nach einem der Ansprüche 1 bis 10, wobei die Hauptdichtung (9) eine über den Umfang der Anschlussmuffe (7) bzw. über den Umfang des Leitungsabschnittes (5) umlaufende aufblasbare Ringdichtung ist, wobei die Ringdichtung im aktivierten Zustand aufgeblasen ist.

12. Ablagevorrichtung nach einem der Ansprüche 1 bis 11, wobei die Hauptdichtung (9) bzw. die aufblasbare Ringdichtung über den Innenumfang einer Anschlussmuffe (7) und über den Außenumfang des Leitungsabschnittes (5) umläuft.

13. Ablagevorrichtung nach einem der Ansprüche 1 bis 12 , wobei die aktivierbare bzw. deaktivierbare Hauptdichtung (9) und die Manschettendichtung (8) am leitungsabschnittseitigen Stirnende der Anschlussmuffe (7) angeordnet sind, bevorzugt benachbart bzw. unmittelbar bevorzugt benachbart zueinander angeordnet sind.

14. Ablagevorrichtung nach einem der Ansprüche 1 bis 13, wobei die Hauptdichtung (9) im aktivierten Zustand und die Manschettendichtung (8) dichtend bzw. abdichtend an der Außenseite des Leitungsabschnittes (5) anliegen.

15. Ablagevorrichtung nach einem der Ansprüche 1 bis 14, wobei die Hauptdichtung (9) im aktivierten Zustand den Leitungsabschnitt (5) konzentrisch in der Anschlussmuffe (7) positioniert.

16. Ablagevorrichtung nach einem der Ansprüche 8 bis 15, wobei die Manschettendichtung (8) bei auftretendem Unterdruck abdichtet.

17. Ablageverfahren, insbesondere zur Ablage von Fasern bzw. zur Ablage von Vliesbahnen aus Fasern, -
insbesondere mit einer Ablagevorrichtung nach einem der Ansprüche 1 bis 16 , wobei zumindest ein Leitungsabschnitt (5) eine Absaugleitung (4) mit zumindest einem Leitungsabschnittsende (6) an einer Anschlussmuffe (7) der Absaugleitung (4) angeschlossen wird,
wobei der Leitungsabschnitt (5) und die Anschlussmuffe (7) relativ zueinander verschwenkt werden können,
wobei zwischen Leitungsabschnitt (5) und Anschlussmuffe (7) zumindest eine umlaufende Dichtung (9) vorhanden ist,
wobei die Dichtung (9) aufgeblasen wird.

## Claims

1. A depositing device, in particular for depositing fibres or for depositing nonwoven webs of fibres - wherein a depositing unit (1) having at least one gaspermeable or air-permeable surface (2) and at least one negative pressure chamber (3) disposed underneath the depositing surface (2) for producing a negative pressure under the depositing surface (2) is provided, wherein at least one suction line (4) is connected to the negative pressure chamber (3), which is connected to at least one negative pressure generating device or to at least one vacuum device, wherein at least one line section (5) of the suction line (4) having at least one line section end (6) is connected to a connection sleeve (7) of the suction line (4), wherein the line section (5) and the connection sleeve (7) are pivotable relative to one another and wherein at least one circumferential seal (8, 9) is provided between line section (5) and connection sleeve (7) and wherein an activatable or deactivatable main seal (9) is interposed between connection sleeve (7) and line section (5).

2. The depositing device according to claim 1, wherein the depositing device is part of a meltblown device and wherein the meltblown fibres or a nonwoven web of meltblown fibres can be deposited on the depositing unit (1) or on the depositing surface (2).

3. The depositing device according to any one of claims 1 or 2, wherein the depositing surface (2) is a depositing foraminous belt or part of a depositing foraminous belt and wherein the depositing foraminous belt is preferably an endlessly circulating depositing foraminous belt.

4. The depositing device according to any one of claims 1 to 3, wherein the depositing unit (1) with depositing surface (2) and negative pressure chamber (3) is movable or displaceable, in particular vertically and/or horizontally displaceable and specifically is vertically and/or horizontally movable or displaceable in particular with respect to a part or with respect to a base part (10) of the suction line (4).

5. The depositing device according to any one of claims 1 to 4, wherein the line section (5) with two line section ends (6) is connected in each case to a connection sleeve (7) of the suction line (4) and wherein preferably the line section (5) is pivotable relative to the connection sleeves (7), particularly preferable is pivotable in a ball joint manner.

6. The depositing device according to any one of claims 1 to 5, wherein the line section (5) with one line section end (6) engages in a connection sleeve (7) - preferably the line section (5) with both line section ends (6) each engages in a connection sleeve (7) - and wherein a line section end (6) is movable or pivotable in the associated connection sleeve (7) - preferably in the manner of a ball joint.

7. The depositing device according to any one of claims 1 to 6, wherein a first connection sleeve (7) is firmly connected to the depositing unit (1) and a second connection sleeve (7) is firmly connected to the base part (10) of the suction line (4).

8. The depositing device according to any one of claims 1 to 7, wherein at least one sleeve seal (8) is provided between a connection sleeve (7) and the line section (5), wherein the sleeve seal (8) is either firmly connected to the connection sleeve (7) or to the line section (5) and abuts against the line section (5) or against the connection sleeve (7) under prestress.

9. The depositing device according to claim 8, wherein the sleeve seal (8) is firmly connected to the connection sleeve (7) - wherein the sleeve seal (8) preferably projects beyond the line-section side front end (11) of the connection sleeve (7) - and wherein the sleeve seal (8) or a seal extension (12) of the sleeve seal (8) abuts against the outer side of the line section (5) under prestress.

10. The depositing device according to any one of claims 1 to 9, wherein in the deactivated state of the main seal (9), a movement or displacement of the depositing unit (1) takes place and wherein in the activated state of the main seal (9), production operation of the depositing device takes place.

11. The depositing device according to any one of claims 1 to 10, wherein the main seal (9) is an inflatable annular seal which runs over the circumference of the connection sleeve (7) or over the circumference of the line section (5), wherein the annular seal is inflated in the activated state.

12. The depositing device according to any one of claims 1 to 11, wherein the main seal (9) or the inflatable annular seal run over the inner circumference of a connection sleeve (7) and over the outer circumference of the line section (5).

13. The depositing device according to any one of claims 1 to 12, wherein the activatable or deactivatable main seal (9) and the sleeve seal (8) are disposed on the line-section side front end of the connection sleeve (7), preferably are disposed adjacently or directly preferably adjacently to one another.

14. The depositing device according to any one of claims 1 to 13, wherein the main seal (9) in the activated state and the sleeve seal (8) abut sealingly or tightly against the outer side of the line section (5).

15. The depositing device according to any one of claims 1 to 14, wherein the main seal (9) in the activated state positions the line section (5) concentrically in the connection sleeve (7).

16. The depositing device according to any one of claims 8 to 15, wherein the sleeve seal (8) seals when negative pressure occurs.

17. A depositing method, in particular for depositing fibres or for depositing nonwoven webs of fibres, -
in particular comprising a depositing device according to any one of claims 1 to 16,
wherein at least one line section (5) of a suction line (4) having at least one line section end (6) is connected to a connection sleeve (7) of the suction line (4),
wherein the line section (5) and the connection sleeve (7) can be pivoted relative to one another,
wherein at least one circumferential seal (9) is provided between line section (5) and connection sleeve (7),
wherein the seal (9) is inflated.

## Revendications

1. Dispositif de dépôt, en particulier pour le dépôt de fibres ou pour le dépôt de bandes de non-tissé en fibres, dans lequel il est prévu un sous-ensemble de dépôt (1) comportant au moins une surface de dépôt imperméable aux gaz ou imperméable à l'air (2) et au moins une chambre de dépressurisation (3) disposée en-dessous de la surface de dépôt (2) pour générer une dépression en-dessous de la surface de dépôt (2), étant raccordée à la chambre de dépressurisation (3)au moins une conduite d'aspiration (4) qui est reliée à au moins un dispositif de génération de dépression ou à au moins un dispositif de dépressurisation, au moins une section de conduite (5) de la conduite d'aspiration (4) étant reliée par au moins une extrémité de section de conduite (6) à un manchon de raccordement (7) de la conduite d'aspiration (4), la section de conduite (5) et le manchon de raccordement (7) pouvant pivoter l'un par rapport à l'autre et au moins un joint périphérique (8, 9) étant placé entre la section de conduite (5) et le manchon de raccordement (7) et un joint principal activable ou désactivable (9) étant intercalé entre le manchon de raccordement (7) et la section de conduite (5).

2. Dispositif de dépôt selon la revendication 1, dans lequel le dispositif de dépôt fait partie intégrante d'un dispositif de fusion-soufflage et dans lequel des fibres traitées par fusion-soufflage ou une bande de non-tissé faite de fibres traitées par fusion-soufflage peut ou peuvent être déposée(s) sur le sous-ensemble de dépôt (1) ou sur la surface de dépôt (2).

3. Dispositif de dépôt selon une des revendications 1 ou 2, dans lequel la surface de dépôt (2) est une bande de crible de dépôt ou fait partie intégrante d'une bande de crible de dépôt et dans lequel la bande de crible de dépôt est de préférence une bande de crible de dépôt tournant en continu.

4. Dispositif de dépôt selon une des revendications 1 à 3, dans lequel le sous-ensemble de dépôt est mobile ou déplaçable avec la surface de dépôt (2) et la chambre de dépressurisation (3) et est en particulier mobile ou déplaçable verticalement et/ou horizontalement, à savoir mobile ou déplaçable verticalement et/ou horizontalement en particulier par rapport à une pièce ou par rapport à une pièce de base (10) de la conduite d'aspiration (4).

5. Dispositif de dépôt selon une des revendications 1 à 4, dans lequel la section de conduite est raccordée aux deux extrémités de section de conduite (4) respectivement au niveau d'un manchon de raccordement (7) de la conduite d'aspiration (4) et dans lequel la section de conduite (5) est de préférence pivotable par rapport au manchon de raccordement (7), très préférentiellement pivotable à la manière d'une rotule.

6. Dispositif de dépôt selon une des revendications 1 à 5, dans lequel la section de conduite s'engrène par une extrémité de section de conduite (6) dans un manchon de raccordement (7), de préférence la section de conduite (5) s'engrène par ses deux extrémités de section de conduite (6) respectivement dans un manchon de raccordement (7), et dans lequel une extrémité de section de conduite (6) est mobile ou pivotable dans le manchon de conduites associé (7), de préférence à la manière d'une rotule.

7. Dispositif de dépôt selon une des revendications 1 à 6, dans lequel un premier manchon de raccordement (7) est relié fixement au sous-ensemble de dépôt (1) et un second manchon de raccordement (7) est relié fixement à la pièce de base (10) de la conduite d'aspiration (4).

8. Dispositif de dépôt selon une des revendications 1 à 7, dans lequel il est prévu, entre un manchon de raccordement(7) et la section de conduite (5), au moins un joint à manchette (8), le joint à manchette (8) étant raccordé fixement soit au manchon de raccordement (7), soit à la section de conduite (5) et étant en contact sous précontrainte avec la section de conduite (5) ou le manchon de raccordement (7).

9. Dispositif de dépôt selon la revendication 8, dans lequel le joint à manchette (8) est raccordé fixement au manchon de raccordement (7), le joint à manchette (8) dépassant de préférence de l'extrémité frontale située côté section de conduite (11) du manchon de raccordement (7) et le joint à manchette (8) ou une rallonge de joint (12) du joint à manchette (8) étant en contact sous précontrainte avec sa face extérieure de la section de conduite (5).

10. Dispositif de dépôt selon une des revendications 1 à 9, dans lequel, à l'état désactivé du joint principal (9), il se produit un mouvement ou un décalage du sous-ensemble de dépôt (1) et, à l'état activé du joint principal (9), l'activité de production du dispositif de dépôt fonctionne.

11. Dispositif de dépôt selon une des revendications 1 à 10, dans lequel le joint principal (9) est un joint annulaire pouvant être soufflé sur la circonférence du manchon de raccordement (7) ou sur la circonférence de la section de conduite (5), le joint annulaire étant soufflé à l'état activé.

12. Dispositif de dépôt selon une des revendications 1 à 11, dans lequel le joint principal (9) ou le joint annulaire pouvant être soufflé entoure la circonférence d'un manchon de raccordement (7) et la circonférence extérieure de la section de conduite (5).

13. Dispositif de dépôt selon une des revendications 1 à 12, dans lequel le joint principal activable ou désactivable (9) et le joint à manchette (8) sont disposés à l'extrémité frontale située coté section de conduite du manchon de raccordement (7), de préférence à proximité ou préférentiellement à proximité immédiate l'un de l'autre.

14. Dispositif de dépôt selon une des revendications 1 à 13, dans lequel le joint principal (9) à l'état activé et le joint à manchette (8) sont en contact de manière hermétique étanche avec la face extérieure de la section de conduite (5).

15. Dispositif de dépôt selon une des revendications 1 à 14, dans lequel le joint principal (9) à l'état activé positionne la section de conduite (5) concentriquement dans le manchon de raccordement (7).

16. Dispositif de dépôt selon une des revendications 8 à 15, dans lequel le joint à manchette (8) est hermétique en cas d'incidence de dépression.

17. Procédé de dépôt, en particulier pour le dépôt de fibres ou pour le dépôt de bandes de non-tissé en fibres, comportant en particulier un dispositif de dépôt selon une des revendications 1 à 16,
dans lequel au moins une section de conduite (5) est raccordée par une conduite d'aspiration (4) par au moins une extrémité de section de conduite (6) à un manchon de raccordement (7) de la conduite d'aspiration (4),
dans lequel la section de conduite (5) et le manchon de raccordement (7) peuvent être pivotés l'un par rapport à l'autre,
dans lequel, entre la section de conduite (5) et le manchon de raccordement (7), au moins un joint périphérique (9) est prévu,
ce joint (9) étant soufflé.
